# EUROPEAN PATENT APPLICATION

(11) **EP 4 589 916 A1**
(43) Date of publication of application: **23.07.2025**
(21) Application number: 23876559.8
(22) Date of filing: 28.09.2023
(51) Int. Cl.: H04L 45/745

(54) **RULE PROCESSING AND RULE SEARCHING METHODS AND APPARATUSES, DEVICE AND READABLE STORAGE MEDIUM**

(30) Priority: 09.10.2022 CN 202211226469; 01.12.2022 CN 202211536277
(71) Applicant: Huawei Technologies Co., Ltd., Shenzhen, Guangdong 518129 (CN)
(72) Inventor: TIAN, Shuzhen, Shenzhen, Guangdong 518129 (CN); HU, Jing, Shenzhen, Guangdong 518129 (CN)
(74) Representative: Isarpatent
(86) International application number: PCT/CN2023/122494
(87) International publication number: WO 2024/078356

(57) **Abstract**

This application belongs to the field of communication technologies, and discloses a rule processing method and apparatus, a rule search method and apparatus, a device, and a readable storage medium. The method includes: An encoding device obtains a plurality of rule addresses, and determines a coverage relationship between rule addresses in the plurality of rule addresses. Then, the encoding device may encode the rule addresses based on the coverage relationship between the rule addresses to obtain first codes of the rule addresses, and replace rule addresses included in an access control rule with the first codes of the rule addresses. The rule address is used to match a packet address carried in a packet, one rule address is one field included in one access control rule, and a length of the first code is less than a length of the rule address corresponding to the first code. The rule address included in the access control rule is encoded into the first code with a smaller length, so that memory occupied by the access control rule is effectively reduced. This reduces storage resources of an ACL.

## Description

This application claims priority to Chinese Patent Application No. 202211226469.8, filed on October 9, 2022 and entitled "SEARCH METHOD AND APPARATUS, AND NETWORK DEVICE", which is incorporated herein by reference in its entirety, and claims priority to Chinese Patent Application No. 202211536277.7, filed on December 1, 2022 and entitled "RULE PROCESSING METHOD AND APPARATUS, RULE SEARCH METHOD AND APPARATUS, DEVICE, AND READABLE STORAGE MEDIUM", both of which are incorporated herein by reference in their entireties.

### TECHNICAL FIELD

This application relates to the field of communication technologies, and in particular, to a rule processing method and apparatus, a rule search method and apparatus, a device, and a readable storage medium.

### BACKGROUND

In a process of transmitting a packet from a source port to a destination port, the packet is forwarded between a plurality of network devices. When forwarding the packet, the network device needs to determine, from an access control list (access control list, ACL), an access control rule that matches the packet, to perform an action indicated by the matched access control rule, so as to forward the packet. For example, the access control rule includes a plurality of fields, and the plurality of fields match fields carried in the packet, to determine a result of matching the access control rule with the packet.

However, with development of communication technologies, a quantity of packets transmitted via the network device is increasing. Based on this, the access control rule needs to include more types of fields, and consequently, memory occupied by the access control rule is excessively high. Therefore, a rule processing method is required to reduce memory occupied by an access control rule that needs to be searched for.

### SUMMARY

This application provides a rule processing method and apparatus, a rule search method and apparatus, a device, and a readable storage medium, to reduce memory occupied by an access control rule that needs to be searched for. The technical solutions are as follows.

According to a first aspect, a rule processing method is provided. The method includes: An encoding device obtains a plurality of rule addresses, and determines a coverage relationship between rule addresses in the plurality of rule addresses. Then, the encoding device may encode the rule addresses based on the coverage relationship between the rule addresses to obtain first codes of the rule addresses, and replace rule addresses included in an access control rule with the first codes of the rule addresses. The rule address is used to match a packet address carried in a packet, one rule address is one field included in one access control rule, and a length of the first code is less than a length of the rule address corresponding to the first code.

The rule address included in the access control rule is encoded into the first code with a smaller length, so that memory occupied by the access control rule is effectively reduced. This reduces storage resources of an ACL, reduces an input bus width of a packet classification module, and saves logical resources. After a length of the access control rule is reduced, another matching field may be added to the access control rule, to improve rule scalability. In addition, because the first codes are determined based on the coverage relationship between the rule addresses, a coverage relationship between the first codes is consistent with the coverage relationship between the rule addresses, so that a replaced access control rule can be used to perform the packet matching process.

In a possible implementation, the obtaining a plurality of rule addresses includes: The encoding device obtains a plurality of access control rules; extracts initial addresses from the plurality of access control rules respectively to obtain a plurality of initial addresses; and filters out a repeated initial address in the plurality of initial addresses, and uses initial addresses obtained through filtering as the plurality of rule addresses. A repeated part in the initial addresses is filtered out, to effectively control a quantity of rule addresses that need to be encoded. This reduces a quantity of encoding tasks, and improves encoding efficiency.

In a possible implementation, the encoding the rule addresses based on the coverage relationship between the rule addresses to obtain first codes of the rule addresses includes: dividing the plurality of rule addresses into different groups based on the coverage relationship between the rule addresses, where one group obtained through division includes one rule address and at least one rule address covered by the one rule address; then the encoding device may encode rule addresses included in each group in a unit of group, to obtain second codes of the rule addresses; and determining the first code based on the second code. The plurality of rule addresses are divided into the different groups, and then are encoded in the unit of group. Encoding tasks of the plurality of rule addresses are split and executed, and execution efficiency is high.

In a possible implementation, the encoding rule addresses included in each group to obtain second codes of the rule addresses includes: determining an encoding length of each group based on a quantity of rule addresses included in each group; then the encoding device encodes, based on the encoding length of each group, the rule addresses included in each group, to obtain initial codes of the rule addresses included in each group; and combining initial codes obtained by encoding any rule address in the different groups, to obtain a second code of the any rule address, where initial codes of a plurality of rule addresses included in one group are different. First, based on a quantity of rule addresses included in a group, a minimum quantity of codewords that are required to distinguish the rule addresses included in the group, that is, an encoding length, is determined, to limit a length of an initial code. Therefore, a length of an obtained second code is small.

In a possible implementation, before the combining initial codes obtained by encoding any rule address in the different groups, the method further includes: if the any rule address is located in one group, and there is no group whose level is higher than that of the any rule address in the different groups, using a reference code as an initial code of the any rule address in another group, where the level of the group is determined based on a coverage relationship between rule addresses included in the group, the reference code is obtained through encoding based on an encoding length of a reference group, and the reference group is a group whose level is lower than that of the group in which the any rule address is located; or if the any rule address is located in one group, and there is a group whose level is higher than that of the any rule address in the different groups, determining a base address covering the any rule address, and then using an initial code of the base address in another group as an initial code of the any rule address in the another group. Because the rule address is located in only one group, and the rule address has only one initial code, another initial code of the rule address further needs to be set. For groups in which the rule address is located belong to different levels, the encoding device may set the initial code in different manners, and flexibility is high.

In a possible implementation, the encoding rule addresses included in each group to obtain second codes of the rule addresses includes: adjusting, based on an overlapping situation of the rule addresses included in each group, the rule addresses included in each group, so that different adjusted groups include different rule addresses; then the encoding device may determine a prefix code of each adjusted group; and then generating, based on the prefix code of each adjusted group, second codes of rule addresses included in each adjusted group, where the prefix code indicates a same part of second codes of rule addresses included in the adjusted group. After the prefix code of the group is determined, the second codes of the rule addresses may be directly determined based on the prefix code. A determining process is simple. In addition, the second code may be obtained by combining initial codes, or may be determined based on the prefix code. The obtaining manner is diversified and universal.

In a possible implementation, the determining a prefix code of each adjusted group includes: determining an encoding length of each adjusted group based on a quantity of rule addresses included in each adjusted group; and selecting at least two adjusted groups from a plurality of adjusted groups based on the encoding length of each adjusted group for combination, and determining the prefix code of each adjusted group based on a combination result. The groups are selected based on the encoding length for combination, to control an encoding length of a group obtained through combination. Based on the prefix code obtained in this manner, a length of the generated second code is controlled and optimized.

In a possible implementation, the determining the first code based on the second code includes: using the second code as the first code; or selecting at least one codeword from the second code, replacing the at least one codeword with a mask, and using a codeword obtained after the mask is replaced as the first code. A manner of determining the first code based on the second code is not limited, and flexibility is high.

In a possible implementation, after the second codes of the rule addresses are obtained, the method further includes: storing a first correspondence between the second code and the rule address, to determine, based on the first correspondence, the access control rule that matches the packet. Based on the first correspondence, when the access control rule that the packet matches is determined subsequently, it is unnecessary to restore the first code carried in the access control rule to the rule address, and an operation of the matching process is simple and highly-efficient.

In a possible implementation, the rule address includes at least one of a source address and a destination address in the access control rule. A type of the rule address and a quantity of rule addresses are not limited in this application, and universality is high.

According to a second aspect, a rule search method is provided. The method includes: A search device receives a to-be-forwarded packet; and then determines an access control rule that matches the packet, where the access control rule includes first codes obtained by encoding rule addresses based on a coverage relationship between the rule addresses, a length of the first code is less than a length of the rule address, the rule address is used to match a packet address carried in the packet, and one rule address is one field included in one access control rule.

Because the length of the first code included in the access control rule is less than that of the rule address, memory occupied by the access control rule is small. In addition, during rule search, the access control rule that matches the packet can be determined without decoding the first code. An operation of rule search is simple and efficiency is higher.

In a possible implementation, the determining an access control rule that matches the packet includes: determining a rule address that matches the packet address; searching for a first correspondence between the rule address and a code based on the rule address that matches the packet address, determining the code corresponding to the rule address that matches the packet address, and using the determined code as a second code that matches the packet address; and then the search device finds, based on the second code, the access control rule that matches the packet, where the first code included in the access control rule that matches the packet matches the second code. Based on the first correspondence, the second code that matches the packet address can be determined without decoding the code. Because the second code may directly match the first code, the second code may be used to search the access control rule. The search process is simple and search efficiency is high.

In a possible implementation, the rule address includes at least one of a source address and a destination address in the access control rule. The rule address is not limited, and flexibility is high.

According to a third aspect, a rule processing apparatus is provided. The apparatus is applied to an encoding device. The apparatus includes: an obtaining module, configured to obtain a plurality of rule addresses, where the rule address is used to match a packet address carried in a packet, and one rule address is one field included in one access control rule; a determining module, configured to determine a coverage relationship between rule addresses in the plurality of rule addresses; and an encoding module, configured to: encode the rule addresses based on the coverage relationship between the rule addresses to obtain first codes of the rule addresses, and replace rule addresses included in the access control rule with the first codes of the rule addresses, where a length of the first code is less than a length of the rule address corresponding to the first code.

In a possible implementation, the obtaining module is configured to: obtain a plurality of access control rules; extract initial addresses from the plurality of access control rules respectively to obtain a plurality of initial addresses; and filter out a repeated initial address in the plurality of initial addresses, and use initial addresses obtained through filtering as the plurality of rule addresses.

In a possible implementation, the encoding module is configured to: divide the plurality of rule addresses into different groups based on the coverage relationship between the rule addresses, where one group includes one rule address and at least one rule address covered by the one rule address; encode rule addresses included in each group to obtain second codes of the rule addresses; and determine the first code based on the second code.

In a possible implementation, the encoding module is configured to: determine an encoding length of each group based on a quantity of rule addresses included in each group; encode, based on the encoding length of each group, the rule addresses included in each group, to obtain initial codes of the rule addresses included in each group, where initial codes of a plurality of rule addresses included in one group are different; and combine initial codes obtained by encoding any rule address in the different groups, to obtain a second code of the any rule address.

In a possible implementation, the encoding module is further configured to: if the any rule address is located in one group, and there is no group whose level is higher than that of the any rule address in the different groups, use a reference code as an initial code of the any rule address in another group, where the level of the group is determined based on a coverage relationship between rule addresses included in the group, the reference code is obtained through encoding based on an encoding length of a reference group, and the reference group is a group whose level is lower than that of the one group; or if the any rule address is located in one group, and there is a group whose level is higher than that of the any rule address in the different groups, determine a base address covering the any rule address, and use an initial code of the base address in another group as an initial code of the any rule address in the another group.

In a possible implementation, the encoding module is configured to: adjust, based on an overlapping situation of the rule addresses included in each group, the rule addresses included in each group, where different adjusted groups include different rule addresses; determine a prefix code of each adjusted group, where the prefix code indicates a same part of second codes of rule addresses included in the adjusted group; and generate, based on the prefix code of each adjusted group, the second codes of the rule addresses included in each adjusted group.

In a possible implementation, the encoding module is configured to: determine an encoding length of each adjusted group based on a quantity of rule addresses included in each adjusted group; and select at least two adjusted groups from a plurality of adjusted groups based on the encoding length of each adjusted group for combination, and determine the prefix code of each adjusted group based on a combination result.

In a possible implementation, the encoding module is configured to: use the second code as the first code; or select at least one codeword from the second code, replace the at least one codeword with a mask, and use a codeword obtained after the mask is replaced as the first code.

In a possible implementation, the apparatus further includes: a storage module, configured to store a first correspondence between the second code and the rule address, where the first correspondence is used to determine the access control rule that matches the packet.

In a possible implementation, the rule address includes at least one of a source address and a destination address in the access control rule.

According to a fourth aspect, a rule search apparatus is provided. The apparatus is applied to a search device. The apparatus includes: a receiving module, configured to receive a to-be-forwarded packet; and a determining module, configured to determine an access control rule that matches the packet, where the access control rule includes first codes obtained by encoding rule addresses based on a coverage relationship between the rule addresses, a length of the first code is less than a length of the rule address, the rule address is used to match a packet address carried in the packet, and one rule address is one field included in one access control rule.

In a possible implementation, the determining module is configured to: determine a rule address that matches the packet address; search for a first correspondence between the rule address and a code based on the rule address that matches the packet address, determine the code corresponding to the rule address that matches the packet address, and use the determined code as a second code that matches the packet address; and find, based on the second code, the access control rule that matches the packet, where the first code included in the access control rule that matches the packet matches the second code.

In a possible implementation, the rule address includes at least one of a source address and a destination address in the access control rule.

According to a fifth aspect, a computing device is provided. The device includes a processor, and the processor is configured to load and run at least one instruction, so that the computing device implements any rule processing method in the first aspect, or implements any rule search method in the second aspect.

In a possible implementation, the computing device further includes a memory, and the memory is configured to store the at least one instruction.

According to a sixth aspect, a computer-readable storage medium is provided. The computer-readable storage medium stores at least one instruction, and the instruction is loaded and executed by a processor to implement any rule processing method in the first aspect, or implement any rule search method in the second aspect.

According to a seventh aspect, a computer program (product) is provided. The computer program (product) includes a computer program or instructions, and the computer program or instructions are executed by a processor, so that a computer implements any rule processing method in the first aspect, or implements any rule search method in the second aspect.

According to an eighth aspect, a rule management system is provided. The rule management system includes an encoding device and a search device, the encoding device is configured to implement any rule processing method in the first aspect, and the search device is configured to implement any rule search method in the second aspect.

According to a ninth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method according to any one of the first aspect or the possible implementations of the first aspect, or the method according to any one of the second aspect or the possible implementations of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a tenth aspect, a chip is provided, including a processor, configured to invoke program instructions or code stored in the memory and run the instructions or code stored in the memory, so that a communication device on which the chip is mounted is enabled to perform the methods in the foregoing aspects.

According to an eleventh aspect, another chip is provided, including an input interface, an output interface, a processor, and a memory. The input interface, the output interface, the processor, and the memory are connected through an internal connection path. The processor is configured to execute code in the memory. When the code is executed, the processor is configured to perform the methods in the foregoing aspects.

It should be understood that, for beneficial effect achieved by the technical solutions in the third aspect to the eleventh aspect and the corresponding possible implementations, refer to the technical effect of the first aspect and the second aspect and the corresponding possible implementations of the first aspect and the second aspect. Details are not described herein again.

### BRIEF DESCRIPTION OF DRAWINGS

FIG. 1 is a diagram of an implementation environment according to an embodiment of this application;
FIG. 2 is a flowchart of a rule processing method according to an embodiment of this application;
FIG. 3 is a diagram of a structure of an access control rule according to an embodiment of this application;
FIG. 4 is a diagram of a structure of another access control rule according to an embodiment of this application;
FIG. 5 is a diagram of a coverage relationship between rule addresses according to an embodiment of this application;
FIG. 6 is a diagram of another coverage relationship between rule addresses according to an embodiment of this application;
FIG. 7 is a diagram of still another coverage relationship between rule addresses according to an embodiment of this application;
FIG. 8 is a diagram of a group according to an embodiment of this application;
FIG. 9 is a diagram of group combination according to an embodiment of this application;
FIG. 10 is a diagram of field concatenation according to an embodiment of this application;
FIG. 11 is a flowchart of rule insertion according to an embodiment of this application;
FIG. 12 is a flowchart of a rule search method according to an embodiment of this application;
FIG. 13 is a diagram of transmitting a first code and a second code according to an embodiment of this application;
FIG. 14 is another diagram of transmitting a first code and a second code according to an embodiment of this application;
FIG. 15 is a diagram of a rule search process according to an embodiment of this application;
FIG. 16 is a diagram of a structure of a rule processing apparatus according to an embodiment of this application;
FIG. 17 is a diagram of a structure of a rule search apparatus according to an embodiment of this application;
FIG. 18 is a diagram of a structure of a network device according to an embodiment of this application; and
FIG. 19 is a diagram of a structure of another network device according to an embodiment of this application.

### DESCRIPTION OF EMBODIMENTS

Terms used in implementations of this application are only used to explain specific embodiments of this application, but are not intended to limit this application. To make the objectives, technical solutions, and advantages of this application clearer, the following further describes the implementations of this application in detail with reference to the accompanying drawings.

With development of communication technologies, an increasing quantity of application scenarios relate to packet transmission. Packet transmission is implemented through forwarding by a plurality of network devices. When forwarding a packet, a network device extracts a plurality of fields from a packet header of the packet, and searches, based on the extracted plurality of fields, a plurality of access control rules stored in an ACL, to determine an access control rule that matches the packet. For example, the access control rule stored in the ACL includes a plurality of fields, and the plurality of fields included in the access control rule match the plurality of fields extracted from the packet header, to determine, based on a result of matching the fields, the access control rule that matches the packet. After determining the access control rule that matches the packet, the network device may perform an action corresponding to the matched access control rule on the packet, for example, perform an action such as filtering, rate limiting, or statistics collection on the packet, to forward the packet.

However, as a quantity of packets that need to be transmitted increases, the access control rule also needs to include more types of fields, and consequently, memory occupied by the access control rule is excessively high. This poses a challenge to storage space of the ACL. If a quantity of fields included in the access control rule is reduced only when the access control rule is stored in the ACL, for example, a part of fields are selected from the plurality of fields included in the access control rule, and an access control rule that carries only the part of fields is stored in the ACL, memory occupied by the access control rule can be reduced. However, because one ACL corresponds to one selection manner of the part of fields during storage, one ACL may store the access control rule in one selection manner, fields used for matching are limited, and universality is poor. In view of this, an embodiment of this application provides a rule processing method, to reduce memory occupied by an access control rule that needs to be searched for.

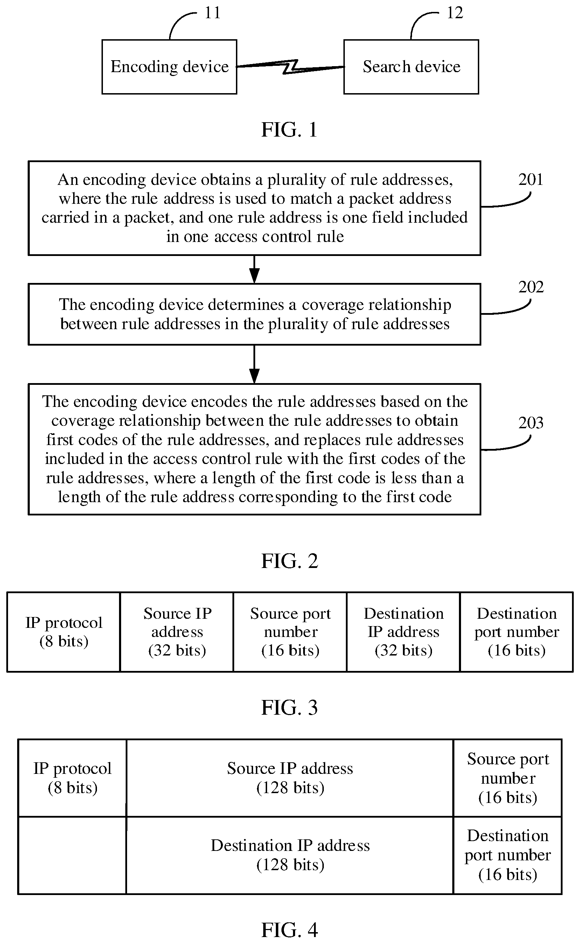

FIG. 1 is a diagram of an implementation environment according to an embodiment of this application. The implementation environment includes an encoding device 11 and a search device 12. The encoding device 11 is configured to encode rule addresses based on a coverage relationship between the rule addresses to obtain first codes of the rule addresses, and replace rule addresses included in an access control rule with the first codes, and send replaced access control rules to the search device 12. After obtaining the access control rules, the search device 12 determines an access control rule that matches a received packet from the access control rules. Optionally, the rule processing method provided in this application may be independently performed by one encoding device, or may be performed by an encoding device cluster including a plurality of encoding devices through interaction. Similarly, rule search method may also be independently executed by one search device, or may be executed by a search device cluster including a plurality of search devices through interaction.

For example, the encoding device 11 or the search device 12 may be a server, for example, a central server, an edge server, or a local server in a local data center. The server may be a physical server, or may be a cloud server that provides a cloud computing service. In some embodiments, the encoding device 11 or the search device 12 may also be a terminal device such as a desktop computer, a notebook computer, or a smartphone. Alternatively, the encoding device 11 or the search device 12 may be a network device that can support data processing, for example, a router or a switch. A product form of the encoding device 11 or the search device 12 is not limited in embodiments of this application.

An embodiment of this application provides a rule processing method. The rule processing method may be applied to the implementation environment shown in FIG. 1. The method may be performed by the encoding device 11 shown in FIG. 1. A flowchart of the method is shown in FIG. 2, and includes S201 to S203.

S201: The encoding device obtains a plurality of rule addresses, where the rule address is used to match a packet address carried in a packet, and one rule address is one field included in one access control rule.

For example, in addition to including an action performed on the packet, one access control rule further includes a plurality of fields. The plurality of fields are used to match a plurality of fields carried in the packet, so that a result of matching the packet and the access control rule is determined based on a result of matching the fields. Optionally, the fields included in the access control rule are, for example, an internet protocol (internet protocol, IP), a source address, a source port number, a destination address, and a destination port number.

The foregoing describes the fields included in the access control rule. The following further describes the fields in the access control rule with reference to accompanying drawings. FIG. 3 is a diagram of a structure of an access control rule according to an embodiment of this application. FIG. 3 shows fields included in the access control rule and lengths of the fields when a type of the access control rule is an internet protocol version 4 (internet protocol version 4, IPv4) rule. Refer to FIG. 3. The fields included in the access control rule are an IP protocol with a length of 8 bits (bits), a source IP address with a length of 32 bits, a source port number with a length of 16 bits, a destination IP address with a length of 32 bits, and a destination port number with a length of 16 bits.

FIG. 4 is a diagram of a structure of another access control rule according to an embodiment of this application. FIG. 4 shows fields included in the access control rule and lengths of the fields when a type of the access control rule is an internet protocol version 6 (internet protocol version 6, IPv6) rule. Meanings of the fields shown in FIG. 4 are similar to those of the fields shown in FIG. 3, and a difference lies in that lengths of some fields are different. For details, refer to descriptions of the fields in FIG. 3 in the foregoing embodiment. Details are not described herein again.

It can be learned from the foregoing example that the access control rule includes a field for matching the packet address, and the field may be at least one of the source address or the destination address, for example, the source IP address and the destination IP address shown in FIG. 3 or FIG. 4. The field for matching the packet is also a rule address. Optionally, a process in which the encoding device obtains the rule addresses includes: obtaining a plurality of access control rules; extracting initial addresses from the plurality of access control rules respectively to obtain a plurality of initial addresses; and filtering out a repeated initial address in the plurality of initial addresses, and using initial addresses obtained through filtering as the plurality of rule addresses.

For example, the encoding device obtains an access control rule sent by another network device. Alternatively, the encoding device provides an information input control, and an encoding object inputs an access control rule via the information input control, so that the encoding device obtains the plurality of access control rules. The encoding object is an object that needs to store the access control rule in an ACL. In a possible implementation, the plurality of access control rules obtained by the encoding device need to be stored in the ACL. The plurality of access control rules may be stored in a same ACL, or may be stored in different ACLs. For example, memory space of a network device that stores the ACL is limited, and the plurality of access control rules cannot be stored in the memory space. Therefore, the plurality of access control rules are stored in different ACLs.

However, regardless of the foregoing obtaining method or storage situation of the access control rule, the encoding device processes the obtained access control rule in a similar way, and may extract the initial address from the access control rule. For example, the encoding device extracts the source address in the access control rule as the initial address. The encoding device may alternatively extract the destination address in the access control rule as the initial address, or extract the source address and the destination address, and use both the source address and the destination address as initial addresses. However, it should be noted that, regardless of whether the source address is used as the initial address, the destination address is used as the initial address, or both the source address and the destination address are used as the initial addresses, processes of determining the rule addresses based on the foregoing three types of initial addresses and obtaining the first codes by encoding the rule addresses are similar. Therefore, in this embodiment of this application, an example in which the source address is used as the initial address is used to describe a process of determining the rule address based on the initial address and encoding the rule address. For an encoding process in which the initial address is another address, refer to similar descriptions. Details are not described herein again.

In a possible case, initial addresses extracted by the encoding device from different access control rules may be the same, that is, there are repeated initial addresses. For example, if actions indicated by two access control rules are different, but carried fields are the same, initial addresses in the two access control rules are the same. Optionally, one initial address includes two parts: a value (value) and a prefix length (prefix_len). For example, a value of an initial address 10.111.0.0/16 of an access control rule 1 is 10.111.0.0, and prefix_len is 16 bits. When prefix lengths of two initial addresses are the same and values are also the same, it is determined that the two initial addresses are the same. After determining same initial addresses, the encoding device performs filtering on the same initial addresses, and reserves one of the same initial addresses. A plurality of initial addresses obtained through filtering are used as the rule addresses. A repeated initial address in the initial addresses is filtered out, to reduce a quantity of rule addresses that need to be encoded, and improve encoding efficiency.

S202: The encoding device determines a coverage relationship between rule addresses in the plurality of rule addresses.

For example, the coverage relationship indicates a number repetition situation of two rule addresses. A coverage relationship between two rule addresses includes two cases: one rule address covers another rule address, and one rule address does not cover another rule address. Table 1 shows a group of rule addresses provided in embodiments of this application. The following uses Table 1 as an example to describe the coverage relationship between the rule addresses.

**Table 1**

| Access control rule | Rule address |
|---|---|
| 1 | 10.111.0.0/16 |
| 2 | 10.111.1.1/32 |
| 3 | 10.111.3.0/24 |
| 4 | 10.111.3.1/32 |
| 5 | 10.111.3.2/32 |
| 6 | 10.111.3.10/32 |
| 7 | 22.128.55.0/25 |
| 8 | 33.135.0.0/16 |

Table 1 shows the rule addresses corresponding to the eight access control rules, namely, the access control rule 1 to the access control rule 8. It can be learned from the rule address shown in Table 1 that the rule address is divided into a plurality of groups of digits via a plurality of decimal points ".". One group of digits represents one network node, and a host IP address that is used as the rule address is formed by a plurality of network nodes. Because node coverage may occur on the network node, for example, one set of network nodes enable at least one end of each side in a network to be in contact with the network node in the set, the network node covers the network node in the set. A coverage relationship between network nodes may be reflected by a digit value of the network node, and a network node with a smaller digit value may cover a network node with a larger digit value. For example, if last two groups of digits 0.0 in a rule address 1 (the rule address of the access control rule 1) are greater than last two groups of digits 1.1 in a rule address 2, it is determined that a network node of the rule address 1 covers a network node of the rule address 2.

Due to existence of the node coverage, there is also a coverage relationship between rule addresses obtained by concatenating digits of the plurality of network nodes. This may also be considered as a reason why there is the coverage relationship between the rule addresses. For example, the rule address 1 in Table 1 covers the rule address 2. In a possible implementation, the coverage relationship may be determined based on lengths and digits of the rule addresses. If a length X of one rule address is less than a length L of another rule address, and digits of the rule address whose length is X are the same as first X digits of the rule address whose length is L, it is determined that the one rule address covers the another rule address. X and L are both positive integers, and L is greater than X. In other words, when the rule address 1 and the rule address 2 are converted into binary bit values, a length of the rule address 1 needs to be less than a length of the rule address 2, and first X digits of the rule address 2 are the same as digits of the rule address 1.

Based on the foregoing content, it may be understood that, because the rule address 1 covers the rule address 2, when the packet address carried in the packet successfully matches the rule address 2, the packet address of the packet can also successfully match the rule address 1 because the first X digits of the rule address 2 are the same as the digits of the rule address 1. In other words, when the packet address carried in the packet successfully matches one rule address, the packet address also successfully matches a rule address that covers the rule address.

In addition, in a process of encoding the rule address, it needs to be ensured that a matching relationship between a first code and the packet address remains unchanged. In other words, when the rule address successfully matches the packet address, the first code obtained by encoding the rule address can also match the packet address. The first code needs to restore the coverage relationship between the rule addresses. Therefore, before encoding the rule addresses, the encoding device needs to determine the coverage relationship between the rule addresses based on lengths and bit values of the rule addresses.

Optionally, the encoding device determines the coverage relationship between the rule addresses based on the lengths and digits of the rule addresses. Table 2 shows a group of rule addresses provided in embodiments of this application.

**Table 2**

| Access control rule | Initial address |
|---|---|
| A | 10****** |
| B | 100***** |
| C | 1011**** |
| D | 10100*** |
| E | 10111*** |
| F | 101010** |
| G | 101101** |
| H | 1010100* |
| I | 1010100* |
| J | 1011**** |

For ease of description, the initial addresses in Table 2 each are represented by using a length of 8 bits. After obtaining the plurality of initial addresses shown in Table 2, the encoding device first filters out a same, that is, a repeated, initial address in Table 2. For example, the initial address in the access control rule I is the same as the initial address in the access control rule H, the initial address in the access control rule J is the same as the initial address in the access control rule C, and the initial address in the access control rule I and the initial address in the access control rule J are filtered out. Based on lengths and bit values of a plurality of rule addresses obtained through filtering, a coverage relationship between the rule addresses is determined as that a rule address A can cover a rule address B, a rule address C, a rule address D, and a rule address F, the rule address C can cover a rule address E and a rule address G, and the rule address F can cover a rule address H. The rule address A is an initial address extracted from the access control rule A. Meanings of other rule addresses are similar to the meaning of the rule address A. For details, refer to related descriptions. Details are not described herein again.

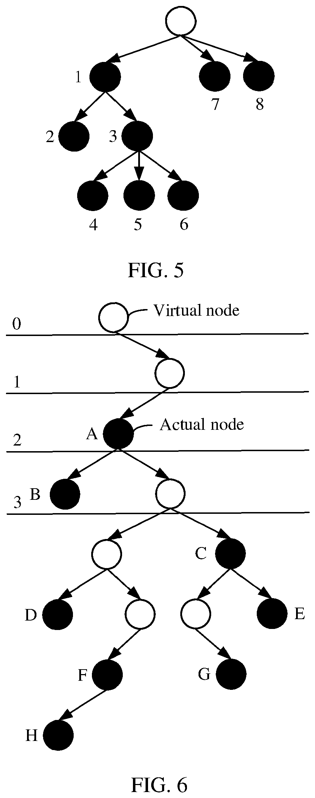

In a possible implementation, the coverage relationship between the rule addresses may be represented in a form of a multi-tree. For example, a multi-tree shown in FIG. 5 represents the coverage relationship between the plurality of rule addresses in Table 1. The coverage relationship between the rule addresses in Table 2 may also be represented in a form of a multi-tree.

Optionally, the encoding device establishes an initial multi-tree shown in FIG. 6 based on the coverage relationship between the plurality of rule addresses in Table 2. The multi-tree in FIG. 6 is arranged hierarchically based on quantities of non-mask (mask) bits of the rule addresses. Optionally, a mask in the rule address is represented by "*", and a non-mask is represented by "0" or "1". In FIG. 6, a white circle represents a virtual node that does not have a rule address, and a black circle represents an actual node that has a rule address.

Because there is no rule address whose quantity of non-mask bits is 0 or 1 in Table 2, nodes at levels used to represent the two types of quantities of non-mask bits in FIG. 6 are virtual nodes that are represented by white circles. The rule address A is 10******, and a quantity of non-mask bits is 2. Therefore, there is one actual node at a level used to represent that the quantity of non-mask bits is 2, and the actual node is the rule address A. Position meanings of other rule addresses in FIG. 6 are similar to the position meaning of the rule address A in FIG. 6. For details, refer to related descriptions. Details are not described herein again. An arrow between circles in FIG. 6 indicates the coverage relationship between the rule addresses. For example, an arrow from a black circle representing the rule address A points to a black circle representing the rule address B indicates that the rule address A covers the rule address B.

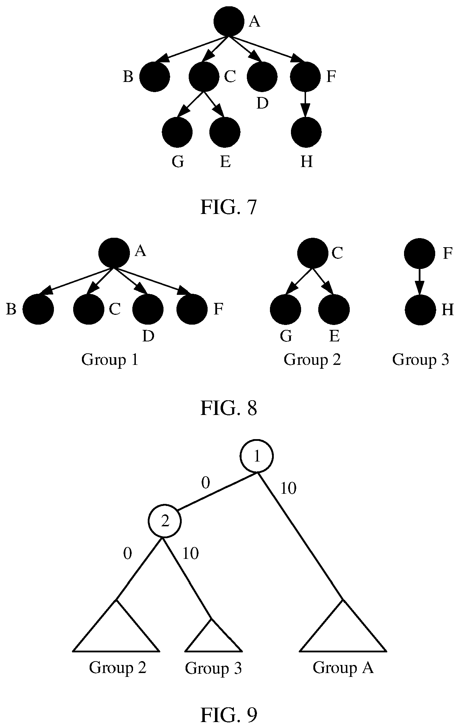

A bifurcated tree is constructed hierarchically based on the quantity of non-mask bit, so that a construction process is more organized. However, when encoding is performed based on the coverage relationship subsequently, the rule address needs to be encoded, and for the virtual node on the bifurcated tree, there is no rule address that needs to be encoded. Therefore, the bifurcated tree may be further simplified, and the virtual node in the bifurcated tree is omitted. FIG. 6 is used as an example. A coverage relationship diagram obtained by simplifying the bifurcated tree in FIG. 6 is shown in FIG. 7. The coverage relationship between the plurality of rule addresses is clearly presented and processed by using the coverage relationship diagram, to facilitate a subsequent encoding operation based on the coverage relationship.

S203: The encoding device encodes the rule addresses based on the coverage relationship between the rule addresses to obtain first codes of the rule addresses, and replaces rule addresses included in the access control rule with the first codes of the rule addresses, where a length of the first code is less than a length of the rule address corresponding to the first code.

In a possible implementation, a process in which the encoding device performs encoding based on the coverage relationship between the rule addresses includes: dividing the plurality of rule addresses into different groups based on the coverage relationship between the rule addresses, where one group includes one rule address and at least one rule address covered by the one rule address; encoding rule addresses included in each group to obtain second codes of the rule addresses; and determining the first code based on the second code.

When one rule address covers another rule address, the rule address also covers a rule address covered by the another rule address. For example, the rule address A shown in Table 2 covers the rule address H. In other words, when coverage relationships in which the rule address A covers the rule address F, and the rule address F covers the rule address H are known, a coverage relationship in which the rule address A covers the rule address H may also be directly obtained. Therefore, the coverage relationship between the rule address A and the rule address H may not be considered during grouping. In other words, a quantity of rule addresses that cover another rule address in one group obtained through division is 1, and for a covered rule address, there is no rule address covered by the rule address in the group.

The rule addresses shown in Table 2 are still used as examples. When division is performed based on the coverage relationship, although the rule address F covered by the rule address A further covers the rule address H, because a quantity of rule addresses that can cover another rule address in one group is 1, a division result is that the rule address A and the rule address F are located in one group, and the rule address F and the rule address H are located in another group.

In addition, a quantity of covered rule addresses included in the group may be all rule addresses covered by the rule address. For example, in Table 2, because the rule address A covers the rule address B, the rule address C, the rule address D, and the rule address F, one group obtained through division includes the foregoing five rule addresses. Optionally, the quantity of covered rule addresses included in the group may also be some rule addresses covered by the rule address. Because a process of encoding the rule address based on the group that includes all the rule addresses and a process of encoding the rule address based on the group that includes the some rule addresses are similar, the following uses the group that includes all the rule addresses as an example for description.

For example, groups obtained through division may also be represented by using a bifurcated tree. For example, the bifurcated tree shown in FIG. 7 is divided to obtain a plurality of groups shown in FIG. 8. Three groups obtained through division are a group 1 including the rule address A, the rule address B, the rule address C, the rule address D, and the rule address F, a group 2 including the rule address C, the rule address G, and the rule address E, and a group 3 including the rule address F and the rule address H. An arrow in FIG. 8 represents a coverage relationship. For example, if an arrow from the rule address F in the group 3 points to the rule address H, it indicates that the rule address F covers the rule address H.

After obtaining the plurality of groups through division based on the coverage relationship, the encoding device may encode rule addresses in the group in a group encoding manner. In a possible implementation, the rule addresses in the group may be encoded in manners that include but are not limited to the following two manners.

Encoding manner 1: An encoding length of each group is determined based on a quantity of rule addresses included in each group. The rule addresses included in each group are encoded based on the encoding length of each group, to obtain initial codes of the rule addresses included in each group. Initial codes of a plurality of rule addresses included in one group are different. Initial codes obtained by encoding any rule address in the different groups are combined, to obtain a second code of the any rule address.

In a possible implementation, a formula for determining the encoding length of each group is: W=logₖN. W is the encoding length of the group, N is the quantity of rule addresses included in the group, and k is a quantity of types of codewords used for encoding. For example, when the encoding device uses binary codewords "0" and "1" during encoding, a quantity of types of codewords is 2. In this case, a formula for determining the encoding length is W=log₂N. When k types of codewords are used, a minimum quantity of codewords required to distinguish N rule addresses may be calculated according to the formula logₖN. Because processes of obtaining second codes by using codewords of different quantities of types for encoding are similar, when an encoding process is subsequently described in this application, an example in which "0" and "1" are used for encoding is temporarily used.

When the encoding device calculates the encoding length of each group according to the foregoing formula, because the encoding length indicates a quantity of codewords of the initial code, the determined encoding length needs to be a positive integer. Therefore, in a process of determining the encoding length according to the foregoing formula, the encoding device follows a rounding-up rule. In other words, when a result obtained through calculation according to the formula is an integer, the calculation result is used as the encoding length of the group. The group 3 in FIG. 8 is used as an example. A quantity of rule addresses included in the group 3 is 2, that is, log₂2=1. It is determined that an encoding length of the group 3 is 1. When the result obtained through calculation according to the formula is not an integer, a smallest integer among integers greater than the calculation result is used. The group 1 in FIG. 8 is used as an example. A quantity of rule addresses included in the group 1 is 5, and 3 is a positive integer greater than log₂5 and closest to log₂5. It is determined that an encoding length of the group 1 is 3. A quantity of rule addresses included in the group 2 is 3, and 2 is a positive integer greater than log₂3 and closest to log₂3.

Then, the encoding device may encode, based on the encoding length, the rule addresses included in the group, to obtain initial codes. Initial codes of different rule addresses in a same group are different. The group 1 in FIG. 8 is still used as an example. Initial codes of the rule addresses are: a rule address A: 100, a rule address B: 000, a rule address C: 001, a rule address D: 010, and a rule address F: 011. Initial codes of the rule addresses in the group 2 in FIG. 8 are a rule address C: 10, a rule address G: 00, and a rule address E: 01. Initial codes of the rule addresses in the group 3 in FIG. 8 are a rule address F: 1 and a rule address H: 0.

Optionally, lengths of second codes of different rule addresses need to be unified, and therefore the encoding device further needs to unify lengths of initial codes of rule addresses in groups at a same level. A level of a group is determined based on a coverage relationship between rule addresses included in the group. Herein, for ease of understanding, a covered rule address in one group is referred to as a reference address, and a rule address used to cover the reference address in the group is referred to as a base address. FIG. 8 is still used as an example. For two rule addresses in the group 3, because a coverage relationship between the rule address F and the rule address H is that the rule address F covers the rule address H, the rule address F is a base address in the group 3, and the rule address H is a reference address in the group 3.

For example, if a base address in any group is a covered reference address in another group, it is determined that a level of the any group is one level lower than a level of the another group. The groups shown in FIG. 8 are still used as examples for description. Because there is no rule address that covers the rule address A in the group 1 in the plurality of rule addresses, it is determined that a level of the group 1 is highest, and is set to a first level. The rule address C that is in the group 2 and that is used as a base address is covered by the rule address A in the group 1. Therefore, it is determined that a level of the group 2 is one level lower than the level of the group 1, and the level of the group 2 is a second level. Similarly, a level of the group 3 is also the second level.

Optionally, if encoding lengths of groups at a same level are different, the encoding device supplements a group with a short encoding length according to a group with a long encoding length. Supplementing herein is supplementing a quantity of bits to an initial code of the group with the short encoding length. A supplementation manner is, for example, supplementing 0 to a most significant bit. The group 3 is used as an example. Because an encoding length of the group 2 is 2, 0s need to be supplemented to most significant bits of initial codes in the group 3, to obtain supplemented initial codes: a rule address F: 01 and a rule address H: 00. Certainly, another codeword may be used for supplementation at another position, for example, 1 is supplemented to a least significant bit.

In addition, the lengths of the initial codes only need to be unified before the initial codes are concatenated. The encoding device may select to perform supplementation after the initial codes are obtained through encoding as shown in the foregoing embodiment, or may select, before the initial codes are obtained by encoding the rule addresses, to use a longest encoding length as an encoding length of groups at a same level by calculating encoding lengths of the groups at the same level. For example, if an encoding length of the group 2 is 2 and an encoding length of the group 3 is 1, the encoding length of the group 3 is adjusted to 2, and rule addresses included in the group 3 are encoded based on the adjusted encoding length, to obtain initial codes of the rule addresses included in the group.

Regardless of an occasion at which the encoding device unifies the lengths of the initial codes, the encoding device may concatenate the initial codes with the unified lengths to obtain a second code. Optionally, for one rule address, there may be a rule address that covers the rule address in a plurality of rule addresses, or there may be a rule address that is covered by the rule address in the plurality of rule addresses. Therefore, one rule address may be grouped into two groups, to obtain two initial codes. The encoding device may combine the initial codes of the rule address in the two groups to obtain a second code of the rule address.

For example, a combination formula is: Second code=(Initial code 1<<max(W2, W3))|Initial code 2. A level of a group in which the initial code 1 is located is higher than a level of a group in which the initial code 2 is located, "<<" indicates a left shift, and max(W2, W3) indicates that a quantity of bits shifted from the initial code 1 to the left is a maximum value in W2 and W3. W2 and W3 are encoding lengths of different groups, and levels of the different groups are the same as a level corresponding to the initial code 2. For example, the level of the group of the initial code 2 is a second level, and W2 and W3 are encoding lengths of groups at the second level. In a combination formula provided in this application, that there are two groups at a same level is used as an example. If there are more groups at a same level, a quantity of bits shifted to the left is a maximum value in encoding lengths of all the groups.

The rule address C is used as an example. A level of the group 1 is higher than a level of the group 2. Therefore, the initial code 1 is an initial code 001 in the group 1, and the initial code 2 is an initial code 10 in the group 2. There are two groups at the level of the group 2, and encoding lengths are W2=2 and W3=1. Based on this, 001 is shifted to the left by two bits. "|" indicates an OR operation, that is, an OR operation is performed on the shifted initial code 1 and the initial code 2, and an obtained result is consistent with a result obtained by filling the initial code 2 into a vacant bit at the right of a position to which the initial code 1 is shifted. A second code 00110 of the rule address C, and a second code 01101 of the rule address F are obtained through combination.

If the rule address is located in only one group, the rule address has only one initial code, and therefore the encoding device needs to obtain another initial code for combination. However, for different cases in which the rule address is located in the group, corresponding obtaining manners are also different.

Case 1: There is no group whose level is higher than that of any rule address in the plurality of groups, that is, the level of the group of the rule address is a highest level. The groups shown in FIG. 8 are still used as examples. The group 1 is a group with a highest level. Because there is no rule address that covers the rule address A in the group 1 in the plurality of rule addresses, the rule address A is located only in the group 1. Because there are no rule addresses that are covered by the rule address B and the rule address D in the plurality of rule addresses in the group 1, the rule address B and the rule address D are located only in the group 1.

For the case 1, the encoding device may use a reference code as an initial code of any rule address in another group, and combine the initial code of the rule address and the reference code to obtain a second code. The reference code is obtained through encoding based on an encoding length of a reference group, and the reference group is a group whose level is lower than that of a group in which the any rule address is located. For example, a group whose level is lower than that of the group 1 is the group 2, an encoding length of the group is 2, and a reference code is set to 00. Therefore, a second code of the rule address A is 10000, a second code of the rule address B is 00000, and a second code of the rule address D is 01000. These second codes are obtained through combination.

Case 2: There is a level of another group higher than a level of the group in which the any rule address is located. The three groups shown in FIG. 8 are still used as examples. Because there are no rule addresses that are covered by the rule address G and the rule address E in the group 2 in the plurality of rule addresses, the rule address G and the rule address E are located only in the group 2. The group 2 is not a group with a highest level.

In this case, the encoding device determines a base address that covers any rule address, and uses an initial code of the base address in another group as an initial code of the any rule address in the another group. For example, the any rule address is the rule address G located in the group 2, and the base address covering the any rule address is the rule address C. In this case, an initial code of the base address in the another group is an initial code 001 of the rule address C in the group 1. The initial code 001 is combined with an initial code 00 of the rule address G in the group 2, to obtain a second code 00100 of the rule address G. Similarly, a second code 00101 of the rule address E is obtained, and a second code 01100 of the rule address H is obtained. The rule addresses are separately encoded in a grouping manner, to ensure that there may be different second codes in the second codes of the rule addresses.

It should be noted that, the foregoing example is intended to describe a process of encoding the rule address in the encoding manner 1, but is not used to limit a quantity of levels and a combination order of the groups. The plurality of groups obtained by dividing the plurality of rule addresses may be the three groups shown in the foregoing embodiment, or may be more groups. The level of the group may be the two levels, or may be more levels. When the level of the group is greater than 2, the foregoing steps may be performed iteratively from bottom to top or from top to bottom for combination. In addition, the combination order may be that the initial code of the group with the high level is first placed, the initial code of the group with the low level is first placed, or may be that the two initial codes are interpolated based on the bit level. This is not limited in embodiments of this application.

Encoding manner 2: The rule addresses included in each group are adjusted based on an overlapping situation of the rule addresses included in each group, where different adjusted groups include different rule addresses. A prefix code of each adjusted group is determined, where the prefix code indicates a same part of second codes of rule addresses included in the adjusted group. The second codes of the rule addresses included in each adjusted group are generated based on the prefix code of each adjusted group.

In a possible implementation, according to the grouping manner in the foregoing embodiment, one rule address may appear in two groups. Therefore, rule addresses included in groups need to be adjusted, so that different groups do not have repeated rule addresses. The groups shown in FIG. 8 are still used as examples. Because the rule address C included in the group 1 is further located in the group 2, and the rule address F included in the group 1 is further located in the group 3, the rule address C and the rule address F are removed from the group 1, to obtain a group A including the rule address A, the rule address B, and the rule address D. The rule addresses included in the group 2 and the rule addresses included in the group 3 remain unchanged.

After adjusting the rule addresses included in the groups, the encoding device may determine the prefix code of the adjusted group, and a determining process includes: determining an encoding length of each adjusted group based on a quantity of rule addresses included in each adjusted group; and selecting at least two adjusted groups from a plurality of adjusted groups based on the encoding length of each adjusted group for combination, and determining the prefix code of each adjusted group based on a combination result.

In one possible case, combination is performed based on a quantity of types of codewords used during encoding. A quantity Y of combined groups is the same as the quantity of types of codewords. In other words, when the encoding device performs encoding by using two codewords 0 and 1, because a quantity of types of codewords is 2, two groups are combined during combination and grouping. In this way, one combined group may correspond to 0, and the other combined group may correspond to 1, to implement distinguishing. Optionally, when the encoding device performs combination and grouping, Y groups with shortest encoding lengths are selected for combination. A process of determining an encoding length of each group is similar to the process of determining the encoding length of each group in the foregoing encoding manner 1. For details, refer to related descriptions. Details are not described herein again.

For example, Y is equal to 2, and the plurality of groups are the group A, the group 2, and the group 3 in the foregoing embodiment. Because an encoding length of the group 3 is 1, an encoding length of the group 2 is 2, and an encoding length of the group A is 2, for the three groups, a shortest encoding length is 1, and a second shortest encoding length is 2. Therefore, the group 2 is randomly selected from the group 2 and the group A, for combining with the group 3. For a combined group, a calculation formula of an encoding length of the combined group is max(W2, W3)+1. W2 is the encoding length of the group 2, and W3 is the encoding length of the group 3. A maximum value is selected from W2 and W3 because at least W2 codewords are required for the group 2 to distinguish rule addresses in the group 2, and 1 is added because after the several rule addresses in the group 2 are distinguished by using the W2 codewords, one codeword is further required to distinguish the rule addresses in the group 2 from the rule addresses in the group 3. The encoding length of the combined group is determined according to the foregoing calculation formula, to ensure that second codes of rule addresses in the combined group are different.

The encoding device selects two groups from the plurality of groups based on the encoding length of each group for combination, then continues to select two groups based on a quantity of remaining groups after combination, repeatedly performs the combination operation, and determines that combination of the groups ends until a quantity of combined groups is the quantity 2 of types of codewords. The group A, the group 2, and the group 3 in the foregoing embodiment are still used as examples. After the group 2 and the group 3 are combined into one group, remaining groups are one group A and one combined group B. A quantity of groups is 2, and the quantity is equal to the quantity of types of codewords. The encoding device ends combination of the groups.

In a possible case, the foregoing process may also be represented in a form of a multi-tree. One group is used as one node, and a process of combining the groups is also a process of converting the multi-tree into a binary tree. FIG. 9 is a diagram of group combination according to an embodiment of this application. Refer to FIG. 9. A combined binary tree has two bifurcations: a bifurcation 1 pointing to the group B and the group A, and a bifurcation 2 pointing to the group 2 and the group 3.

Then, the encoding device may determine a prefix code of each group based on a grouping result. Two groups on a same bifurcation are distinguished by 0 and 1 respectively. Because lengths of second codes of rule addresses included in different groups need to be unified, for a group with a short encoding length, the encoding device further performs supplementation. For example, in a combined group diagram shown in FIG. 9, an encoding length of the group A is 2, an encoding length of the group B is 3, and the encoding length of the group A is less than the encoding length of the group B. Therefore, a codeword 0 is supplemented behind a code allocated to the group A to complete supplementation, and therefore it is determined that a prefix code of the group A is 10.

For the combined group, the encoding device further distinguishes two groups in the group, that is, the group 2 and the group 3, allocates a codeword 0 to the group 2, and allocates a codeword 1 to the group 3 for distinguishing. In addition, according to a principle of unified encoding lengths, the encoding device supplements 0 behind a codeword of the group 3 with a short encoding length, to obtain a prefix code 010 of the group 3. A prefix code of the group 2 is 00.

After determining the prefix code of each group, the encoding device may determine, based on the prefix code of each group, second codes of the rule addresses included in each group. A process of determining the second code may be: determining subsequent codes of the rule addresses in the group based on the encoding length of the group, and concatenating the prefix code and the subsequent code.

For example, if a prefix code of the group A is 10, an encoding length of the group A is 2, and it is determined that a subsequent code of the rule address A is 00, an obtained second code of the group A is 1000. Processes of determining second codes of other rule addresses are similar to the process of determining the second code of the rule address A, and are not described one by one by using examples. The encoding device determines, based on the foregoing operation, that a second code of the rule address B is 1001 and a second code of the rule address D is 1010. In the group 2, a second code of the rule address C is 0010, a second code of the rule address G is 0000, and a second code of the rule address E is 0001. In the group 3, a second code of the rule address F is 0101, and a second code of the rule address H is 0100.

Regardless of a manner in which the encoding device obtains the second code through encoding, the encoding device may determine the first code based on the second code, and a determining process includes: using the second code as the first code; or selecting at least one codeword from the second code, replacing the at least one codeword with a mask, and using a codeword obtained after the mask is replaced as the first code. Optionally, when the encoding device determines the first code, a constraint that needs to be satisfied is that a second code of a reference address matches a first code of a base address corresponding to the reference address. In other words, when one rule address covers another rule address, a first code of the rule address matches a second code of the another rule address. The groups shown in FIG. 8 are still used as examples. For example, the reference address is the rule address H, and the base address is the rule address F. In this case, a second code of the rule address H can successfully match a first code of the rule address F. Optionally, that the second code matches the first code means that a non-mask codeword in the first code is the same as a codeword in the second code. For example, a second code 0000 matches a first code 00**.

In addition, there is also a constraint that a second code of a base address does not match a first code of a reference address corresponding to the base address. That the rule address H is a reference address and the rule address F is a base address is still used as an example. A second code of the rule address F cannot match a first code of the rule address H. The encoding device may select a codeword from the second code based on the foregoing constraint and replace the codeword with a mask, to obtain the first code.

For different encoding manners, the encoding device may select codewords according to different selection principles, so that the codewords obtained after masks are replaced meet the foregoing constraint. The encoding manner 1 is used as an example. Because one second code is obtained by concatenating initial codes in two groups, when it is determined that a codeword is replaced with a mask, the initial code may be used as a unit. If the rule address is a base address that covers another rule address in the group, an initial code of the rule address in the group is adjusted to a mask. The second code 00110 of the rule address C is still used as an example. The second code 00110 is formed by an initial code 001 in the group 1 and an initial code 10 in the group 2. Because the rule address C is a base address in the group 2, the initial code 10 of the rule address C in the group 2 needs to be replaced with a mask **.

Optionally, if any rule address is a covered reference address in the group, an initial code of the rule address in the group is reserved. That the any rule address is the rule address C is still used as an example. Because the rule address C is a reference address in the group 1, the encoding device reserves an initial code 001 of the rule address C in the group 1, and does not replace the initial code 001 with a mask. Therefore, an obtained first code of the rule address C is 001**. For a codeword corresponding to the reference code, the encoding device also adjusts the codeword to the mask in a process of converting the second code into the first code. In a possible case, the second codes obtained by encoding the plurality of rule addresses provided in Table 2 in the encoding manner 1 and first codes obtained based on the second codes are shown in Table 3.

**Table 3**

| Access control rule | Rule address | Second code | First code |
|---|---|---|---|
| A | 10****** | 10000 | ***** |
| B | 100***** | 00000 | 000** |
| C | 1011**** | 00110 | 001** |
| D | 10100*** | 01000 | 010** |
| E | 10111*** | 00101 | 00101 |
| F | 101010** | 01101 | 011** |
| G | 101101** | 00100 | 00100 |
| H | 1010100* | 01100 | 011*0 |

Although the initial address I and the initial address J in Table 2 are filtered out during filtering and do not participate in encoding, because the initial address I is the same as the rule address H, a second code 01100 of the rule address H may be used as a second code of the initial address I, and a first code 011*0 of the rule address H may be used as a first code of the initial address I. The initial address J is similar. Because the initial address J is the same as the rule address C, a second code 00110 of the rule address C may be used as a second code of the initial address J, and a first code 001** of the rule address C may be used as a first code of the initial address J.

For example, for the second code obtained in the encoding manner 2, the second code is formed by combining the prefix code and the subsequent code, and a difference between second codes of rule addresses in a same group lies in a subsequent code. Therefore, based on a coverage relationship between rule addresses in a group, if a rule address is a base address in the group, a subsequent code of the rule address may be set as a mask. For a prefix code of the rule address, whether a codeword needs to be selected and adjusted to a mask may be determined based on whether there is a coverage relationship between the rule address and a rule address in another group.

The rule address F in the encoding manner 2 is used as an example for description. Because the rule address F is a base address in the group 3, a subsequent code of the rule address F is adjusted to a mask. In addition, because there is no rule address covered by the rule address F in another group, a prefix code of the rule address F may be reserved, and an obtained first code is 010*. The rule address C is similar, and an obtained first code is 00**. However, for the rule address A, because the rule address A further covers the rule address C in the group 2 and the rule address F in the group 3, the first code of the rule address A needs to successfully match the second codes of the two rule addresses, and the encoding device adjusts the prefix code 10 corresponding to the rule address A to the mask, to obtain the first code of the rule address A as ****.

The foregoing is a process of encoding the base address in the group. For the reference address in the group, the second code of the reference address may be determined as the first code. In a possible case, the second codes obtained by encoding the plurality of rule addresses provided in Table 2 in the encoding manner 2 and first codes obtained based on the second codes are shown in Table 4.

**Table 4**

| Access control rule | Rule address | Second code | First code |
|---|---|---|---|
| A | 10****** | 1000 | **** |
| B | 100***** | 1001 | 1001 |
| C | 1011**** | 0010 | 00** |
| D | 10100*** | 1010 | 1010 |
| E | 10111*** | 0001 | 0001 |
| F | 101010** | 0101 | 010* |
| G | 101101** | 0000 | 0000 |
| H | 1010100* | 0100 | 0100 |

As in Table 3, if the rule address H is the same as the initial address I, the encoding device may also use a first code 0100 of the rule address H as a first code of the initial address I and use a second code 0100 of the rule address H as a second code of the initial address I. If the initial address J is the same as the rule address C, the encoding device uses a first code 00** of the rule address C as a first code of the initial address J and uses a second code 0010 of the rule address C as a second code of the initial address J.

For the plurality of rule addresses shown in Table 1 in S202, the encoding device may also determine the second codes of the rule addresses based on the coverage relationship between the rule addresses, and determine first codes based on the second code. The obtained second codes and the obtained first codes are shown in Table 5.

**Table 5**

| Access control rule | Rule address | Second code | First code |
|---|---|---|---|
| 1 | 10.111.0.0/16 | 0101 | 0*** |
| 2 | 10.111.1.1/32 | 0100 | 0100 |
| 3 | 10.111.3.0/24 | 0011 | 00** |
| 4 | 10.111.3.1/32 | 0000 | 0000 |
| 5 | 10.111.3.2/32 | 0001 | 0001 |
| 6 | 10.111.3.10/32 | 0010 | 0010 |
| 7 | 22.128.55.0/25 | 1000 | 1000 |
| 8 | 33.135.0.0/16 | 1001 | 1001 |

It can be seen from Table 5 that, regardless of whether the second code is determined as the first code, or the codeword is selected from the second code to be replaced with the mask, to use a code obtained after the mask is replaced as the first code, it can be ensured that a first code of a same rule address can successfully match a second code of the rule address.

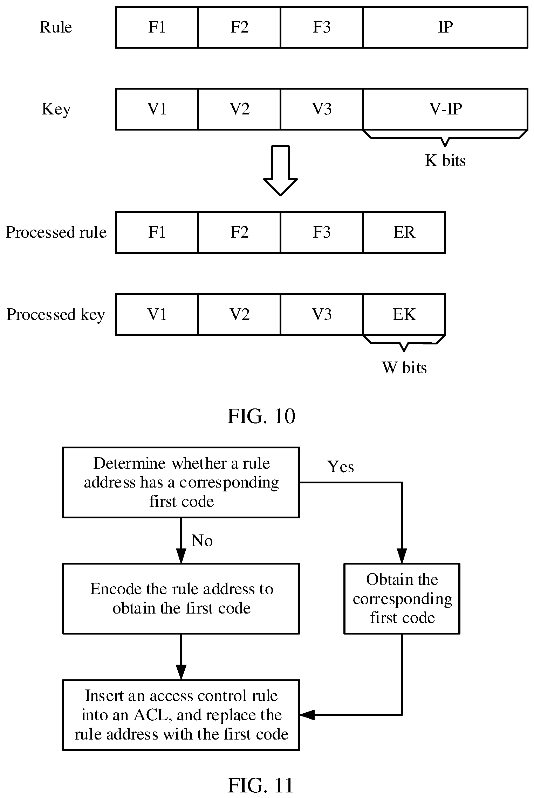

For example, after determining the first codes of the rule addresses, the encoding device replaces rule addresses included in the access control rule with the first codes. Because the length of the first code is less than that of the rule address, a length of a rule address field may be reduced. This reduces storage resources of an ACL module, further reduces an input bus width of a packet search module, and saves logical resources. For example, FIG. 10 is a diagram of change of an access control rule, where F1 to F3 indicate other fields carried in the access control rule, and IP indicates a rule address. Through the foregoing operation, the encoding device encodes a rule address whose length is K bits into a first code whose length is W bits, that is, a re-encoded rule (encoded rule, ER) field in FIG. 10. W is a positive integer, and K is a positive integer greater than W. Because a length of the rule address in the access control rule is reduced, space in the access control rule may be used to add another field used for matching, and scalability and flexibility of the access control rule are improved.

In a possible case, the encoding device further stores a first correspondence between the second code and the rule address, where the first correspondence is used to determine the access control rule that matches the packet. When the first correspondence is stored, for a plurality of access control rules that include a same rule address, only one first correspondence needs to be stored, so that memory space is reduced. Because the second code may match the first code, the first correspondence is stored, so that in a rule search process, the first code does not need to be decoded, and a second code that matches a packet address may be determined from a plurality of second codes based on the first correspondence, to determine the matched first code. This implements searching of the access control rule.

Storage space for storing the first correspondence is not limited in embodiments of this application, and may be storage space of the encoding device. Alternatively, the storage space may be storage space for establishing a communication connection to the encoding device. For example, a search device is configured for rule search, the search device sends an access control rule that needs to be stored to the encoding device, and the encoding device encodes a rule address and stores a first correspondence in storage space of the search device.

In addition, if another access control rule needs to be added to the ACL that stores the plurality of access control rules, the encoding device may first extract a rule address of the access control rule address, and then perform an operation shown in FIG. 11 to determine whether the rule address has a corresponding first code. If there is the corresponding first code, the encoding device replaces the rule address carried in the access control rule with the first code, and stores a replaced access control rule in the ACL. However, if there is no first code corresponding to the rule address, the encoding device may perform the steps shown in S202 and S203 in the foregoing embodiment, encode the extracted rule address to obtain the first code, and then replace the rule address in the access control rule with the first code, to insert the access control rule into the ACL.

In conclusion, according to the rule processing method provided in this embodiment of this application, the rule address included in the access control rule is encoded into the first code with a smaller length, so that memory occupied by the access control rule is effectively reduced. This reduces storage resources of the ACL, reduces an input bus width of a packet classification module, and saves logical resources. A quantity of fields carried in the access control rule does not need to be adjusted, and after the length of the rule address is compressed, space for adding another field used for matching may be provided in the access control rule, to improve rule scalability and universality. Because the first codes are determined based on the coverage relationship between the rule addresses, a coverage relationship between the first codes is consistent with the coverage relationship between the rule addresses, so that a replaced access control rule can be used in the packet matching process.

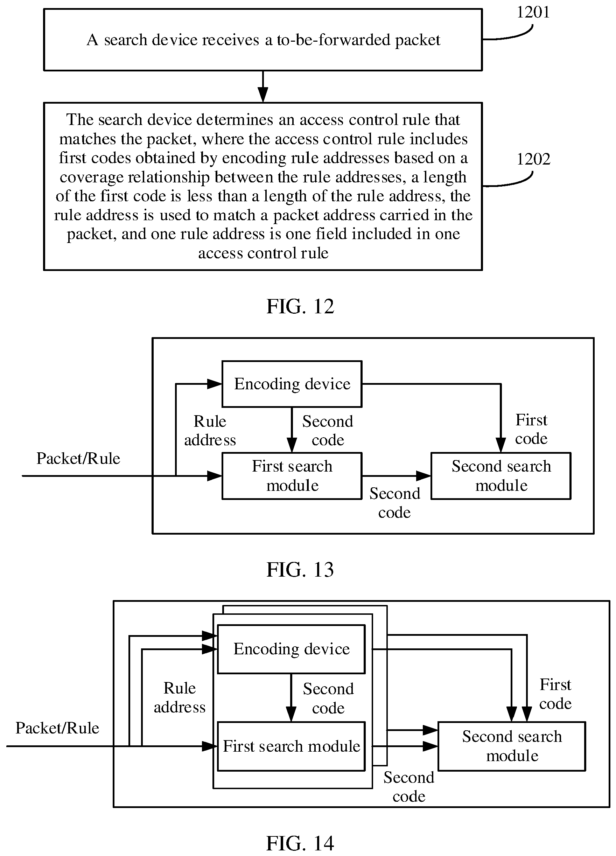

An embodiment of this application provides a rule search method. The rule search method may be performed by a search device. A flowchart of the method is shown in FIG. 12, and includes S1201 and S1202.

S1201: The search device receives a to-be-forwarded packet.

For example, the search device receives a packet sent by an upstream network device, to obtain the to-be-forwarded packet. The packet may be a packet of any type, including but not limited to a video type packet, an image type packet, a voice type packet, and the like. In addition, the search device may receive the to-be-forwarded packet according to any transmission protocol, for example, according to an IPv4 protocol or according to an IPv6 protocol.

S1202: The search device determines an access control rule that matches the packet, where the access control rule includes first codes obtained by encoding rule addresses based on a coverage relationship between the rule addresses, a length of the first code is less than a length of the rule address, the rule address is used to match a packet address carried in the packet, and one rule address is one field included in one access control rule.

In a possible implementation, a process in which the search device determines the access control rule that matches the packet includes: determining a rule address that matches the packet address; searching for a first correspondence between the rule address and a code based on the rule address that matches the packet address, determining the code corresponding to the rule address that matches the packet address, and using the determined code as a second code that matches the packet address; and finding, based on the second code, the access control rule that matches the packet, where the first code included in the access control rule that matches the packet matches the second code.

The packet address is a field of an address carried in the packet. The packet address may indicate a source IP address of a transmit end of the packet, or may indicate a destination IP address of a destination end that the packet needs to reach. Similarly, the rule address may alternatively be at least one of a source address or a destination address. In a possible implementation, the search device searches for the rule address of the packet address according to a longest match principle. For the packet address carried in the received packet, bit-by-bit (bit-by-bit) comparison is performed from a plurality of stored rule addresses until a rule address with a longest matching degree is found, to be used as the rule address that matches the packet. Then, the second code that matches the packet address may be determined based on a first correspondence between the rule address and the second code.

For example, the second code is a code for determining the first code. For a relationship between the second code and the first code, refer to related descriptions in S203 in the embodiment shown in FIG. 2. Details are not described herein again. Optionally, the search device receives a second code obtained through encoding by an encoding device, and stores a first correspondence between the second code and a rule address, where the first correspondence indicates that the second code is obtained through encoding based on which rule address.

FIG. 13 is a flowchart of rule processing according to an embodiment of this application. Refer to FIG. 13. An encoding device encodes a rule address to obtain a first code and a second code of the rule address. The second code and a first correspondence of the second code are stored in a first search module of a search device.

Subsequently, the search device may find the second code that matches a packet address in the first search module, and send the second code to a second search module, to determine an access control rule that matches the second code from the second search module. Optionally, the second search module may be understood as a module that stores an ACL. In this case, FIG. 13 shows a process in which the encoding device sends the first code to the second search module, that is, sends the access control rule that carries the first code to the second search module, so that the access control rule is stored in the ACL. It can be learned that the second search module stores a plurality of access control rules, and each access control rule includes a first code. A second code may directly match the first code, for example, whether a non-mask codeword of the first code is the same as a non-mask codeword of the second code is compared. The search device may searches, based on the second code, the second search module for an access control rule that matches a packet.

One second code can match the first code determined based on the second code, and can also successfully match a code that covers the first code. Therefore, a plurality of access control rules that match the packet may be determined by using one second code. The rule address A and the rule address B shown in S203 are used as examples. When the second code is a second code 1001 of the rule address B, the second code of the rule address B can match a first code 1001 of the rule address B, and can also successfully match a first code **** of the rule address A. Therefore, it is determined that the packet matches the access control rule A and the access control rule B. This ensures comprehensiveness of rule search.

Optionally, FIG. 13 shows a packet search procedure after only one rule address in one access control rule is encoded into a first code. When a plurality of rule addresses in one access control rule are encoded into first codes, for example, a source address and a destination address included in one access control rule are encoded into first codes, a process of searching for the access control rule is to repeat the foregoing rule search operation. For example, as shown in FIG. 14, two first codes and two second codes are obtained after one access control rule is processed. Therefore, when the access control rule that matches the packet is determined, the two second codes are sent to the second search module, and it is determined that the access control rule matches the packet if both the first codes in the access control rule successfully match the second codes.

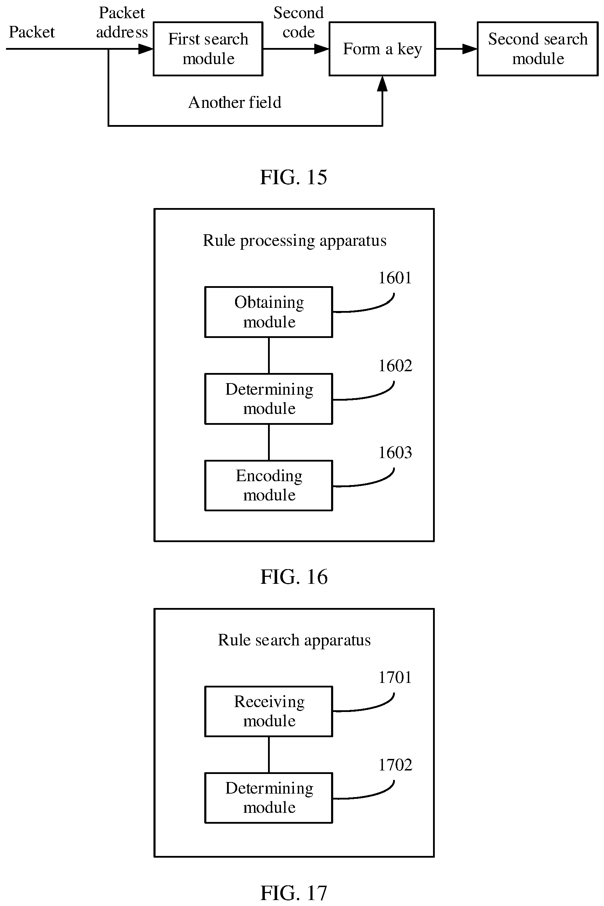

In addition, there are a plurality of fields for matching the packet when the packet matches the access control rule. For example, on the basis of matching the packet address, an IP protocol and a port number further need to be matched. Therefore, when searching for the access control rule that matches the packet, the search device further needs to match another field carried in the packet with another field carried in the access control rule. A process of matching the other fields may be performed asynchronously or synchronously with the process of matching the rule addresses. For example, as shown in FIG. 15, after obtaining the second code from the first search module based on the packet address, the search device concatenates the second code and another field in the packet to form a key (key), and then searches, based on the key, the second search module for the access control rule that matches the packet.

Optionally, FIG. 10 shows a structure of the key. In FIG. 10, V1 to V3 of the key indicate other fields extracted from the packet, and a re-encoded key (encoded key, EK) field indicates the second code. It can be found from FIG. 10 that, a length of the second code is less than that of the packet address, that is, a length of a V-IP in FIG. 10. Therefore, a length of the key obtained through concatenation is also reduced. A transmission rate of a key with a smaller transmission length is higher. This improves rule search efficiency.

In conclusion, according to the rule search method provided in this embodiment of this application, the length of the first code included in the searched access control rule is less than a length of the rule address, and memory occupied by the access control rule is small. Because a coverage relationship between the first codes is the same as the coverage relationship between the rule addresses, a hit result of rule search performed based on the second code is the same as a hit result of search performed based on the packet address to search for the matched rule address. Rule search is comprehensive and more accurate. Based on the first correspondence, the packet address can be matched with the first code without restoring the first code in the access control rule to the rule address. Matching efficiency is high. In addition, because the length of the second code is less than the length of the packet address, a key length for searching is reduced. This improves search efficiency.

The rule processing method in embodiments of this application is described above. Corresponding to the method, an embodiment of this application further provides a rule processing apparatus. FIG. 16 is a diagram of a structure of a rule processing apparatus according to an embodiment of this application. Based on the following plurality of modules shown in FIG. 16, the rule processing apparatus shown in FIG. 16 can perform all or some of the operations shown in FIG. 2. It should be understood that the apparatus may include more additional modules than the shown modules, or a part of the shown modules are omitted. This is not limited in embodiments of this application. As shown in FIG. 16, the apparatus is applied to an encoding device. The apparatus includes:
an obtaining module 1601, configured to obtain a plurality of rule addresses, where the rule address is used to match a packet address carried in a packet, and one rule address is one field included in one access control rule;
a determining module 1602, configured to determine a coverage relationship between rule addresses in the plurality of rule addresses; and
an encoding module 1603, configured to: encode the rule addresses based on the coverage relationship between the rule addresses to obtain first codes of the rule addresses, and replace rule addresses included in the access control rule with the first codes of the rule addresses, where a length of the first code is less than a length of the rule address corresponding to the first code.

In a possible implementation, the obtaining module 1601 is configured to: obtain a plurality of access control rules; extract initial addresses from the plurality of access control rules respectively to obtain a plurality of initial addresses; and filter out a repeated initial address in the plurality of initial addresses, and use initial addresses obtained through filtering as the plurality of rule addresses.

In a possible implementation, the encoding module 1603 is configured to: divide the plurality of rule addresses into different groups based on the coverage relationship between the rule addresses, where one group includes one rule address and at least one rule address covered by the one rule address; encode rule addresses included in each group to obtain second codes of the rule addresses; and determine the first code based on the second code.

In a possible implementation, the encoding module 1603 is configured to: determine an encoding length of each group based on a quantity of rule addresses included in each group; encode, based on the encoding length of each group, the rule addresses included in each group, to obtain initial codes of the rule addresses included in each group, where initial codes of a plurality of rule addresses included in one group are different; and combine initial codes obtained by encoding any rule address in the different groups, to obtain a second code of the any rule address.

In a possible implementation, the encoding module 1603 is further configured to: if the any rule address is located in one group, and there is no group whose level is higher than that of the any rule address in the different groups, use a reference code as an initial code of the any rule address in another group, where the level of the group is determined based on a coverage relationship between rule addresses included in the group, the reference code is obtained through encoding based on an encoding length of a reference group, and the reference group is a group whose level is lower than that of the one group; or if the any rule address is located in one group, and there is a group whose level is higher than that of the any rule address in the different groups, determine a base address covering the any rule address, and use an initial code of the base address in another group as an initial code of the any rule address in the another group.

In a possible implementation, the encoding module 1603 is configured to: adjust, based on an overlapping situation of the rule addresses included in each group, the rule addresses included in each group, where different adjusted groups include different rule addresses; determine a prefix code of each adjusted group, where the prefix code indicates a same part of second codes of rule addresses included in the adjusted group; and generate, based on the prefix code of each adjusted group, the second codes of the rule addresses included in each adjusted group.

In a possible implementation, the encoding module 1603 is configured to: determine an encoding length of each adjusted group based on a quantity of rule addresses included in each adjusted group; and select at least two adjusted groups from a plurality of adjusted groups based on the encoding length of each adjusted group for combination, and determine the prefix code of each adjusted group based on a combination result.

In a possible implementation, the encoding module 1603 is configured to: use the second code as the first code; or select at least one codeword from the second code, replace the at least one codeword with a mask, and use a codeword obtained after the mask is replaced as the first code.

In a possible implementation, the apparatus further includes: a storage module, configured to store a first correspondence between the second code and the rule address, where the first correspondence is used to determine the access control rule that matches the packet.

In a possible implementation, the rule address includes at least one of a source address and a destination address in the access control rule.

The apparatus encodes the rule address included in the access control rule into the first code with a smaller length, so that memory occupied by the access control rule is effectively reduced. This reduces storage resources of an ACL, reduces an input bus width of a packet classification module, and saves logical resources. After a length of the access control rule is reduced, another matching field may be added to the access control rule, to improve rule scalability. In addition, because the first codes are determined based on the coverage relationship between the rule addresses, a coverage relationship between the first codes is consistent with the coverage relationship between the rule addresses, so that a replaced access control rule can be used to perform the packet matching process.

FIG. 17 is a diagram of a structure of a rule search apparatus according to an embodiment of this application. Based on the following plurality of modules shown in FIG. 17, the rule search apparatus shown in FIG. 17 can perform all or some of the operations shown in FIG. 12. It should be understood that the apparatus may include more additional modules than the shown modules, or a part of the shown modules are omitted. This is not limited in embodiments of this application. As shown in FIG. 17, the apparatus is applied to a search device. The apparatus includes:
a receiving module 1701, configured to receive a to-be-forwarded packet; and
a determining module 1702, configured to determine an access control rule that matches the packet, where the access control rule includes first codes obtained by encoding rule addresses based on a coverage relationship between the rule addresses, a length of the first code is less than a length of the rule address, the rule address is used to match a packet address carried in the packet, and one rule address is one field included in one access control rule.

In a possible implementation, the determining module 1702 is configured to: determine a rule address that matches the packet address; search for a first correspondence between the rule address and a code based on the rule address that matches the packet address, determine the code corresponding to the rule address that matches the packet address, and use the determined code as a second code that matches the packet address; and find, based on the second code, the access control rule that matches the packet, where the first code included in the access control rule that matches the packet matches the second code.

In a possible implementation, the rule address includes at least one of a source address and a destination address in the access control rule.

For the apparatus, because the length of the first code included in the access control rule is less than that of the rule address, memory occupied by the access control rule is small. In addition, during rule search, the access control rule that matches the packet can be determined without decoding the first code. An operation of rule search is simple and efficiency is high.

It should be understood that, the apparatuses provided in FIG. 16 and FIG. 17 implements functions of the apparatuses, division of the foregoing functional modules is used as an example for description. In actual application, the foregoing functions may be allocated to different functional modules for implementation as required. In other words, the internal structure of the device is divided into different functional modules, to implement all or part of the functions described above. In addition, the apparatuses provided in the foregoing embodiments and the method embodiments belong to a same concept. For specific implementation processes thereof, refer to the method embodiments. Details are not described herein again.

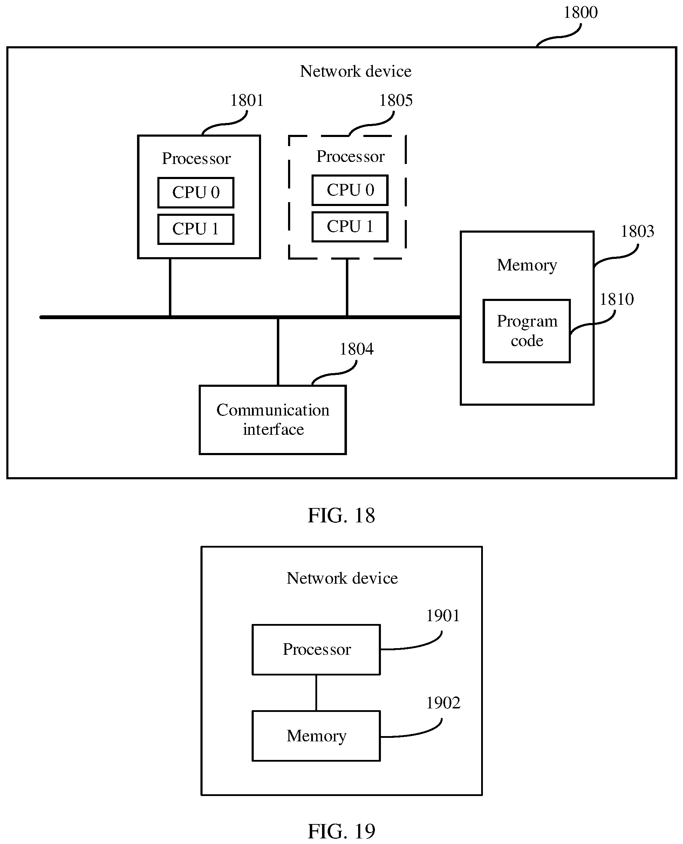

FIG. 18 is a diagram of a structure of a network device 1800 according to an example embodiment of this application. The network device 1800 shown in FIG. 18 is configured to perform operations related to the rule processing method shown in FIG. 2, or perform operations related to the rule search method shown in FIG. 12. The network device 1800 is, for example, a switch or a router, and the network device 1800 may be implemented by using a general bus architecture.

As shown in FIG. 18, the network device 1800 includes at least one processor 1801, a memory 1803, and at least one communication interface 1804.

The processor 1801 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 1801 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable logic gate array (field-programmable gate array, FPGA), a generic array logic (generic array logic, GAL), or any combination thereof. The processor may implement or execute various logical blocks, modules, and circuits described with reference to the content disclosed in embodiments of this application. Alternatively, the processor may be a combination of processors implementing a computing function, for example, a combination of one or more microprocessors, or a combination of a DSP and a microprocessor.

Optionally, the network device 1800 further includes a bus. The bus is configured to transmit information between components of the network device 1800. A bus may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one thick line is used to represent the bus in FIG. 18, but this does not mean that there is only one bus or only one type of bus.

The memory 1803 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of an instruction or a data structure and that can be accessed by a computer, but is not limited thereto. For example, the memory 1803 exists independently, and is connected to the processor 1801 through the bus. Alternatively, the memory 1803 may be integrated with the processor 1801.

The communication interface 1804 uses any apparatus such as a transceiver, and is configured to communicate with another device or a communication network. The communication network may be an Ethernet, a radio access network (RAN), a wireless local area network (wireless local area network, WLAN), or the like. The communication interface 1804 may include a wired communication interface, and may further include a wireless communication interface. Specifically, the communication interface 1804 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In embodiments of this application, the communication interface 1804 may be used by the network device 1800 to communicate with another device.

During specific implementation, in an embodiment, the processor 1801 may include one or more CPUs such as a CPU 0 and a CPU 1 shown in FIG. 18. Each of the processors may be a single-core processor (single-CPU) or a multi-core processor (multi-CPU). Herein, the processor herein may be one or more devices, circuits, and/or processing cores configured to process data (for example, computer program instructions).

During specific implementation, in an embodiment, the network device 1800 may include a plurality of processors, for example, the processor 1801 and a processor 1805 shown in FIG. 18. Each of the processors may be a single-core processor (single-CPU) or a multi-core processor (multi-CPU). The processor herein may be one or more devices, circuits, and/or processing cores configured to process data (for example, computer program instructions).

During specific implementation, in an embodiment, the network device 1800 may further include an output device and an input device. The output device communicates with the processor 1801, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 1801, and may receive an input from a user in a plurality of manners. For example, the input device may be a mouse, a keyboard, a touchscreen device, a sensing device, or the like.

In some embodiments, the memory 1803 is configured to store program code 1810 for executing the solutions of this application, and the processor 1801 may execute the program code 1810 stored in the memory 1803. In other words, the network device 1800 may implement, by using the processor 1801 and the program code 1810 in the memory 1803, the rule processing method provided in the method embodiments, or the rule search method provided in the method embodiments. The program code 1810 may include one or more software modules. Optionally, the processor 1801 may also store program code or instructions for executing the solutions of this application.

In a specific embodiment, the network device 1800 in embodiments of this application may correspond to the encoding device or the search device in the foregoing method embodiments.

Steps of the rule processing method shown in FIG. 2 or the rule search method shown in FIG. 12 are completed by using an integrated logic circuit of hardware in the processor of the network device 1800 or instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

FIG. 19 is a diagram of a structure of another network device according to an embodiment of this application. The network device is, for example, a server. The server may differ greatly due to different configurations or performance, and may include one or more processors 1901 and one or more memories 1902. The one or more memories 1902 store at least one computer program, and the at least one computer program is loaded and executed by the one or more processors 1901, so that the server implements the rule processing method provided in the foregoing method embodiments, or implements the rule search method provided in the foregoing method embodiments. The processor 1901 is, for example, a central processing unit (central processing unit, CPU). Certainly, the network device may further have components such as a wired or wireless network interface, a keyboard, and an input/output interface, so as to perform input/output. The network device may further include another component configured to implement a function of the device. Details are not described herein.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. When the processor executes the instructions stored in the memory, the processor is enabled to perform the rule processing method or the rule search method.

It should be understood that the foregoing processor may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, so that a computer implements any rule processing method above, or implements rule search method above.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor, configured to invoke instructions stored in a memory and run the instructions stored in the memory, so that a communication device in which the chip is installed performs any rule processing method above, or performs any rule search method above.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform any rule processing method above, or perform any rule search method above.

An embodiment of this application further provides a rule management system, including an encoding device and a search device. The encoding device is configured to perform any rule processing method above, and the search device is configured to perform any rule search method above.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

When software is used to implement embodiments, all or some of embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable rule processing apparatus or rule search apparatus, so that when the program code is executed by the computer or the another programmable rule processing apparatus or rule search apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely division into logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in the form of the software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, terms such as "first" and "second" are used to distinguish same items or similar items that have basically same functions. It should be understood that there is no logical or time sequence dependency between "first", "second", and "n^{th}", and a quantity and an execution sequence are not limited. It should also be understood that although the following descriptions use terms such as "first" and "second" to describe various elements, these elements should not be limited by the terms. These terms are simply used to distinguish one element from another. For example, a first image may be referred to as a second image, and similarly, a second image may be referred to as a first image without departing from the scope of the various examples. Both the first image and the second image may be images, and in some cases, may be separate and different images.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of various examples in this specification are merely intended to describe specific examples, but are not intended to constitute a limitation. The terms "one" ("a" and "an") and "the" of singular forms used in the descriptions of the various examples and the appended claims are also intended to include plural forms, unless otherwise specified in the context clearly.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the terms "if" and "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

However, it should be further understood that determining B based on A does not mean that B is determined based only on A. B may alternatively be determined based on A and/or other information.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

## Claims

1. A rule processing method, wherein the method comprises:
obtaining, by an encoding device, a plurality of rule addresses, wherein the rule address is used to match a packet address carried in a packet, and one rule address is one field comprised in one access control rule;
determining, by the encoding device, a coverage relationship between rule addresses in the plurality of rule addresses; and
encoding, by the encoding device, the rule addresses based on the coverage relationship between the rule addresses to obtain first codes of the rule addresses, and replacing rule addresses comprised in the access control rule with the first codes of the rule addresses, wherein a length of the first code is less than a length of the rule address corresponding to the first code.

2. The method according to claim 1, wherein the obtaining a plurality of rule addresses comprises:
obtaining a plurality of access control rules;
extracting initial addresses from the plurality of access control rules respectively to obtain a plurality of initial addresses; and
filtering out a repeated initial address in the plurality of initial addresses, and using initial addresses obtained through filtering as the plurality of rule addresses.

3. The method according to claim 1 or 2, wherein the encoding the rule addresses based on the coverage relationship between the rule addresses to obtain first codes of the rule addresses comprises:
dividing the plurality of rule addresses into different groups based on the coverage relationship between the rule addresses, wherein one group comprises one rule address and at least one rule address covered by the one rule address;
encoding rule addresses comprised in each group to obtain second codes of the rule addresses; and
determining the first code based on the second code.

4. The method according to claim 3, wherein the encoding rule addresses comprised in each group to obtain second codes of the rule addresses comprises:
determining an encoding length of each group based on a quantity of rule addresses comprised in each group;
encoding, based on the encoding length of each group, the rule addresses comprised in each group, to obtain initial codes of the rule addresses comprised in each group, wherein initial codes of a plurality of rule addresses comprised in one group are different; and
combining initial codes obtained by encoding any rule address in the different groups, to obtain a second code of the any rule address.

5. The method according to claim 4, wherein before the combining initial codes obtained by encoding any rule address in the different groups, the method further comprises:
if the any rule address is located in one group, and there is no group whose level is higher than that of the any rule address in the different groups, using a reference code as an initial code of the any rule address in another group, wherein the level of the group is determined based on a coverage relationship between rule addresses comprised in the group, the reference code is obtained through encoding based on an encoding length of a reference group, and the reference group is a group whose level is lower than that of the one group; or
if the any rule address is located in one group, and there is a group whose level is higher than that of the any rule address in the different groups, determining a base address covering the any rule address, and using an initial code of the base address in another group as an initial code of the any rule address in the another group.

6. The method according to claim 3, wherein the encoding rule addresses comprised in each group to obtain second codes of the rule addresses comprises:
adjusting, based on an overlapping situation of the rule addresses comprised in each group, the rule addresses comprised in each group, wherein different adjusted groups comprise different rule addresses;
determining a prefix code of each adjusted group, wherein the prefix code indicates a same part of second codes of rule addresses comprised in the adjusted group; and
generating, based on the prefix code of each adjusted group, the second codes of the rule addresses comprised in each adjusted group.

7. The method according to claim 6, wherein the determining a prefix code of each adjusted group comprises:
determining an encoding length of each adjusted group based on a quantity of rule addresses comprised in each adjusted group; and
selecting at least two adjusted groups from a plurality of adjusted groups based on the encoding length of each adjusted group for combination, and determining the prefix code of each adjusted group based on a combination result.

8. The method according to any one of claims 3 to 7, wherein the determining the first code based on the second code comprises:
using the second code as the first code; or
selecting at least one codeword from the second code, replacing the at least one codeword with a mask, and using a codeword obtained after the mask is replaced as the first code.

9. The method according to any one of claims 3 to 8, wherein after the second codes of the rule addresses are obtained, the method further comprises:
storing a first correspondence between the second code and the rule address, wherein the first correspondence is used to determine the access control rule that matches the packet.

10. The method according to any one of claims 1 to 9, wherein the rule address comprises at least one of a source address and a destination address in the access control rule.

11. A rule search method, wherein the method comprises:
receiving, by a search device, a to-be-forwarded packet; and
determining, by the search device, an access control rule that matches the packet, wherein the access control rule comprises first codes obtained by encoding rule addresses based on a coverage relationship between the rule addresses, a length of the first code is less than a length of the rule address, the rule address is used to match a packet address carried in the packet, and one rule address is one field comprised in one access control rule.

12. The method according to claim 11, wherein the determining an access control rule that matches the packet comprises:
determining a rule address that matches the packet address;
searching for a first correspondence between the rule address and a code based on the rule address that matches the packet address, determining the code corresponding to the rule address that matches the packet address, and using the determined code as a second code that matches the packet address; and
finding, based on the second code, the access control rule that matches the packet, wherein the first code comprised in the access control rule that matches the packet matches the second code.

13. The method according to claim 11 or 12, wherein the rule address comprises at least one of a source address and a destination address in the access control rule.

14. A rule processing apparatus, wherein the apparatus is applied to an encoding device, and the apparatus comprises:
an obtaining module, configured to obtain a plurality of rule addresses, wherein the rule address is used to match a packet address carried in a packet, and one rule address is one field comprised in one access control rule;
a determining module, configured to determine a coverage relationship between rule addresses in the plurality of rule addresses; and
an encoding module, configured to: encode the rule addresses based on the coverage relationship between the rule addresses to obtain first codes of the rule addresses, and replace rule addresses comprised in the access control rule with the first codes of the rule addresses, wherein a length of the first code is less than a length of the rule address corresponding to the first code.

15. The apparatus according to claim 14, wherein the obtaining module is configured to:
obtain a plurality of access control rules; extract initial addresses from the plurality of access control rules respectively to obtain a plurality of initial addresses; and filter out a repeated initial address in the plurality of initial addresses, and use initial addresses obtained through filtering as the plurality of rule addresses.

16. The apparatus according to claim 14 or 15, wherein the encoding module is configured to: divide the plurality of rule addresses into different groups based on the coverage relationship between the rule addresses, wherein one group comprises one rule address and at least one rule address covered by the one rule address; encode rule addresses comprised in each group to obtain second codes of the rule addresses; and determine the first code based on the second code.

17. The apparatus according to claim 16, wherein the encoding module is configured to:
determine an encoding length of each group based on a quantity of rule addresses comprised in each group; encode, based on the encoding length of each group, the rule addresses comprised in each group, to obtain initial codes of the rule addresses comprised in each group, wherein initial codes of a plurality of rule addresses comprised in one group are different; and combine initial codes obtained by encoding any rule address in the different groups, to obtain a second code of the any rule address.

18. The apparatus according to claim 17, wherein the encoding module is further configured to: if the any rule address is located in one group, and there is no group whose level is higher than that of the any rule address in the different groups, use a reference code as an initial code of the any rule address in another group, wherein the level of the group is determined based on a coverage relationship between rule addresses comprised in the group, the reference code is obtained through encoding based on an encoding length of a reference group, and the reference group is a group whose level is lower than that of the one group; or if the any rule address is located in one group, and there is a group whose level is higher than that of the any rule address in the different groups, determine a base address covering the any rule address, and use an initial code of the base address in another group as an initial code of the any rule address in the another group.

19. The apparatus according to claim 16, wherein the encoding module is configured to:
adjust, based on an overlapping situation of the rule addresses comprised in each group, the rule addresses comprised in each group, wherein different adjusted groups comprise different rule addresses; determine a prefix code of each adjusted group, wherein the prefix code indicates a same part of second codes of rule addresses comprised in the adjusted group; and generate, based on the prefix code of each adjusted group, the second codes of the rule addresses comprised in each adjusted group.

20. The apparatus according to claim 19, wherein the encoding module is configured to:
determine an encoding length of each adjusted group based on a quantity of rule addresses comprised in each adjusted group; and select at least two adjusted groups from a plurality of adjusted groups based on the encoding length of each adjusted group for combination, and
determine the prefix code of each adjusted group based on a combination result.

21. The apparatus according to any one of claims 16 to 20, wherein the encoding module is configured to: use the second code as the first code; or select at least one codeword from the second code, replace the at least one codeword with a mask, and use a codeword obtained after the mask is replaced as the first code.

22. The apparatus according to any one of claims 16 to 21, wherein the apparatus further comprises: a storage module, configured to store a first correspondence between the second code and the rule address, wherein the first correspondence is used to determine the access control rule that matches the packet.

23. The apparatus according to any one of claims 14 to 22, wherein the rule address comprises at least one of a source address and a destination address in the access control rule.

24. A rule search apparatus, wherein the apparatus is applied to a search device, and the apparatus comprises:
a receiving module, configured to receive a to-be-forwarded packet; and
a determining module, configured to determine an access control rule that matches the packet, wherein the access control rule comprises first codes obtained by encoding rule addresses based on a coverage relationship between the rule addresses, a length of the first code is less than a length of the rule address, the rule address is used to match a packet address carried in the packet, and one rule address is one field comprised in one access control rule.

25. The apparatus according to claim 24, wherein the determining module is configured to:
determine a rule address that matches the packet address; search for a first correspondence between the rule address and a code based on the rule address that matches the packet address, determine the code corresponding to the rule address that matches the packet address, and use the determined code as a second code that matches the packet address; and find, based on the second code, the access control rule that matches the packet, wherein the first code comprised in the access control rule that matches the packet matches the second code.

26. The apparatus according to claim 24 or 25, wherein the rule address comprises at least one of a source address and a destination address in the access control rule.

27. A computing device, wherein the device comprises a processor, and the processor is configured to load and run at least one instruction, so that the computing device implements the rule processing method according to any one of claims 1 to 10, or implements the rule search method according to any one of claims 11 to 13.

28. The computing device according to claim 27, wherein the device further comprises a memory, and the memory is configured to store the at least one instruction.

29. A computer-readable storage medium, wherein the computer-readable storage medium stores at least one instruction, and the instruction is loaded and executed by a processor to implement the rule processing method according to any one of claims 1 to 10, or implement the rule search method according to any one of claims 11 to 13.

30. A rule management system, wherein the rule management system comprises an encoding device and a search device, the encoding device is configured to perform the rule processing method according to any one of claims 1 to 10, and the search device is configured to perform the rule search method according to any one of claims 11 to 13.
